# EUROPEAN PATENT SPECIFICATION

(11) **EP 4 195 321 B1**
(45) Date of publication and mention of the grant of the patent: **18.02.2026**
(21) Application number: 22211795.4
(22) Date of filing: 06.12.2022
(51) Int. Cl.: H01M 4/36, H01M 4/46, H01M 4/485, H01M 4/505, H01M 4/525, H01M 10/0525, H01M 4/02

(54) **CATHODE ACTIVE MATERIAL FOR LITHIUM SECONDARY BATTERY, METHOD OF MANUFACTURING THE SAME AND LITHIUM SECONDARY BATTERY INCLUDING THE SAME**
KATHODENAKTIVMATERIAL FÜR LITHIUMSEKUNDÄRBATTERIE, VERFAHREN ZUR HERSTELLUNG DAVON UND LITHIUMSEKUNDÄRBATTERIE DAMIT
MATÉRIAU ACTIF DE CATHODE POUR BATTERIE SECONDAIRE AU LITHIUM, SON PROCÉDÉ DE FABRICATION ET BATTERIE SECONDAIRE AU LITHIUM LE COMPRENANT

(30) Priority: 09.12.2021 KR 20210175841
(43) Date of publication of application: 14.06.2023
(73) Proprietor: SK On Co., Ltd., Seoul 03161 (KR)
(72) Inventor: CHOI, Ji Hoon, 34124 Daejeon (KR); KWEON, Hee Jun, 34124 Daejeon (KR); KIM, Jik Soo, 34124 Daejeon (KR); PARK, Sung Soon, 34124 Daejeon (KR)
(74) Representative: Prüfer & Partner mbB Patentanwälte · Rechtsanwälte

(56) References cited:
- WO-A1-2021/015511
- US-B2- 10 135 064

## Description

### BACKGROUND

### 1. Field

The present invention relates to a cathode active material for a lithium secondary battery, a method of manufacturing the same and a lithium secondary battery including the same. More particularly, the present invention relates to a lithium composite oxide-based cathode active material, a method of manufacturing the same and a lithium secondary battery including the same.

### 2. Description of the Related Art

A secondary battery which can be charged and discharged repeatedly has been widely employed as a power source of a mobile electronic device such as a camcorder, a mobile phone, a laptop computer, etc., according to developments of information and display technologies. Recently, a battery pack including the secondary battery is being developed and applied as an eco-friendly power source of an electric automobile, etc.

The secondary battery includes, e.g., a lithium secondary battery, a nickelcadmium battery, a nickel-hydrogen battery, etc. The lithium secondary battery is highlighted due to high operational voltage and energy density per unit weight, a high charging rate, a compact dimension, etc.

For example, the lithium secondary battery may include an electrode assembly including a cathode, an anode and a separation layer (separator), and an electrolyte immersing the electrode assembly. The lithium secondary battery may further include an outer case having, e.g., a pouch shape for accommodating the electrode assembly and the electrolyte.

A lithium composite oxide which may preferably have high capacity, high power and extended life-span properties may be used as a cathode active material of the lithium secondary electricity. Accordingly, the lithium composite oxide capable of maintaining chemical stability even when charge and discharge are repeatedly performed is required.

However, when the lithium composite oxide is exposed to an atmosphere or in contact with an electrolyte, by-products of lithium or nickel due to a side reaction may be generated on a surface of a lithium composite oxide particle. In this case, the life-span and operational stability of the lithium secondary battery may be deteriorated.

Particularly, when of a high nickel-based lithium composite oxide is used, a large amount of lithium impurities (LiOH, Li₂CO₃, etc.) may be formed on the surface, thereby causing deterioration of a battery performance. When the lithium impurities are washed with water, a specific surface area of the cathode active material may be increased, and the side reaction with the electrolyte may be are accelerated, thereby deteriorating stability of a surface structure.

For example, Korean Published Patent Application No. 10-2017-0093085 discloses a cathode active material including a transition metal compound and an ion adsorption binder, but sufficient stability of the cathode active material may not be provided. Further, WO 2021/015511 A1 and US 10135064 B2 respectively disclose a cathode active material including coated lithium metal oxide.

### SUMMARY

According to an aspect of the present invention, there is provided a cathode active material for a lithium secondary battery having improved stability and electrical property according to the claims

According to an aspect of the present invention, there is provided a lithium secondary battery having improved stability and electrical property.

According to an aspect of the present invention, there is provided a method of manufacturing a cathode active material for a lithium secondary battery having improved stability and electrical property.

A cathode active material for a lithium secondary battery includes a lithium composite oxide, and a lithium-aluminum-sulfur-boron oxide formed on a surface of the lithium composite oxide, wherein an equivalence point is formed at pH 8.5 or higher in a titration graph using 0.1N HCl. The lithium composite oxide has a structure of a secondary particle structure in which primary particles are aggregated, and the lithium-aluminum-sulfur-boron oxide is also present at an interface between the primary particles within an inner region of the secondary particle, and wherein, in an energy-dispersive X-ray spectroscopy (EDS) spectrum for a cross section of the lithium composite oxide, a peak intensity of a sulfur component at the interface of the primary particles is greater than an average value of peak intensities of Ni at an inside of the primary particles.

In some embodiments, the lithium-aluminum-sulfur-boron oxide may be amorphous.

In some embodiments, the lithium-aluminum-sulfur-boron oxide may serve as a coating layer of the lithium composite oxide.

In some embodiments, the lithium-aluminum-sulfur-boron oxide may entirely cover the surface of the lithium composite oxide.

In some embodiments, a content of aluminum (Al) may be in a range from 500 ppm to 3,000 ppm, a content of sulfur (S) may be in a range from 200 ppm to 3,000 ppm, and a content of boron (B) may be in a range from 300 ppm to 1,000 ppm.

In some embodiments, the lithium composite oxide may include nickel, and a mole fraction of nickel in the lithium composite oxide may be 0.7 or more among elements other than lithium and oxygen.

In some embodiments, the lithium composite oxide may be represented by Chemical Formula 1.

[Chemical Formula 1] Li_{α}Ni_{y}M_{z}O_{2-β}

In Chemical Formula 1, M includes at least one selected from the group consisting of Co, Mn, Ti, Zr, Al, Sr and W, and 0.7≤α≤1.2, -0.1≤β≤0.5, 0.7≤y≤0.98, and 0.98< y+z≤1.1.

A lithium secondary battery includes a cathode including the cathode active material for a lithium secondary battery according to embodiments as described above, and an anode facing the cathode.

In a method of manufacturing a cathode active material for a lithium secondary battery, a lithium-aluminum-sulfur hydroxide is formed on a surface of a lithium composite oxide. The lithium-aluminum-sulfur hydroxide is dry-reacted with a boron source to form a lithium-aluminum-sulfur-boron oxide on the surface of the lithium composite oxide.

In some embodiments, in the forming of the lithium-aluminum-sulfur hydroxide, the lithium composite oxide may be mixed with a basic reaction solution containing an aluminum source and a sulfur source, and the mixture may be dried.

In some embodiments, a pH of the basic reaction solution may be in a range from 9 to 13.

In some embodiments, the aluminum source may include aluminum hydroxide (Al(OH)₃) or ammonium aluminum sulfate ((NH₄)Al(SO₄)₂).

In some embodiments, the sulfur source may include at least one selected from the group consisting of lithium sulfate (Li₂SO₄), sodium sulfite (Na₂SO₃), sodium sulfate (Na₂SO₄), sodium thiosulfate (Na₂S₂O)₃), sodium dithionite (Na₂S₂O₄), sodium metabisulfite (Na₂S₂O)₃), sodium dithionate (Na₂S₂O₆), sodium pyrosulfate (Na₂S₂O₇) and sodium persulfate (Na₂S₂O₈).

In some embodiments, the drying may be performed at a temperature ranging from 110°C to 150°C.

In some embodiments, the boron source may include at least one selected from the group consisting of metaboric acid (HBO₂), boric acid (H₃BO₃), tetraboric acid (H₂B₄O₇) and triethyl borate (B(OCH₂CH₃)₃).

In some embodiments, the dry-reacting may be performed at a temperature ranging from 250°C to 400°C.

According to embodiments of the present invention, a cathode active material for a lithium secondary battery prepared according to the above-described method is provided. Additionally, a lithium secondary battery including the positive active material prepared according to the above method is provided.

A cathode active material for a lithium secondary battery according to embodiments of the present invention includes a lithium-aluminum-sulfur-boron oxide on a surface of a lithium composite oxide. A phase change in a surface structure of the cathode active material may be suppressed by aluminum having a fixed oxidation number. Additionally, aluminum may react with fluorine ions in an electrolyte to form an aluminum fluoride (AlF₃) coating layer. In this case, the surface structure of the cathode active material may be stabilized to prevent side reactions with the electrolyte.

A sulfur component may also be coated at an interface between primary particles of the lithium composite oxide. Thus, a side reaction between the electrolyte and the cathode active material which may be generated while the electrolyte penetrates into the primary particle interface may be suppressed. Further, generation of by-products caused when the cathode active material is exposed to air and reacts with moisture to be decomposed into lithium hydroxide, lithium carbonate, nickel oxide, etc., may be prevented.

Boron may reduce a specific surface area by smoothly coating the surface of the cathode active material, and thus the side reactions with the electrolyte may be further suppressed.

Therefore, life-span and high temperature stability of the cathode active material may be improved. The lithium-aluminum-sulfur-boron oxide may improve capacity properties of the secondary battery by improving a lithium conductivity of the cathode active material.

### BRIEF DESCRIPTION OF THE DRAWINGS

FIG. 1 is a cross-sectional view illustrating a lithium secondary battery in accordance with exemplary embodiments.
FIG. 2 is a graph showing a solubility of aluminum according to an acidity (pH).
FIG. 3 includes a scanning electron microscopy (SEM) image of a surface of a lithium composite oxide on which a coating layer is formed and an energy-dispersive X-ray spectroscopy (EDS) image showing a distribution of aluminum.
FIG. 4 includes a transmission electron microscope (TEM) image of a cross-section of a lithium composite oxide on which a coating layer is formed and graphs showing distributions of nickel and sulfur analyzed by an EDS line scanning.
FIGS. 5A to 5D are graphs showing a titration of a residual lithium of cathode active materials according to Examples and Comparative Examples.
FIGS. 6A to 6E are X-ray Photoelectron Spectroscopy (XPS) analysis graphs of a sulfur source containing an alkali metal used in Examples.
FIG. 7 is a surface XPS analysis graph of lithium composite oxides according to Examples.

### DETAILED DESCRIPTION OF THE EMBODIMENTS

According to embodiments of the present invention, a cathode active material for a lithium secondary battery including a lithium-aluminum-sulfur-boron oxide on a surface, and a method of manufacturing the cathode active material are provided. Further, a lithium secondary battery having improved stability and electrical property is also provided.

Hereinafter, embodiments of the present invention will be described in detail with reference to exemplary embodiments and the accompanying drawings.

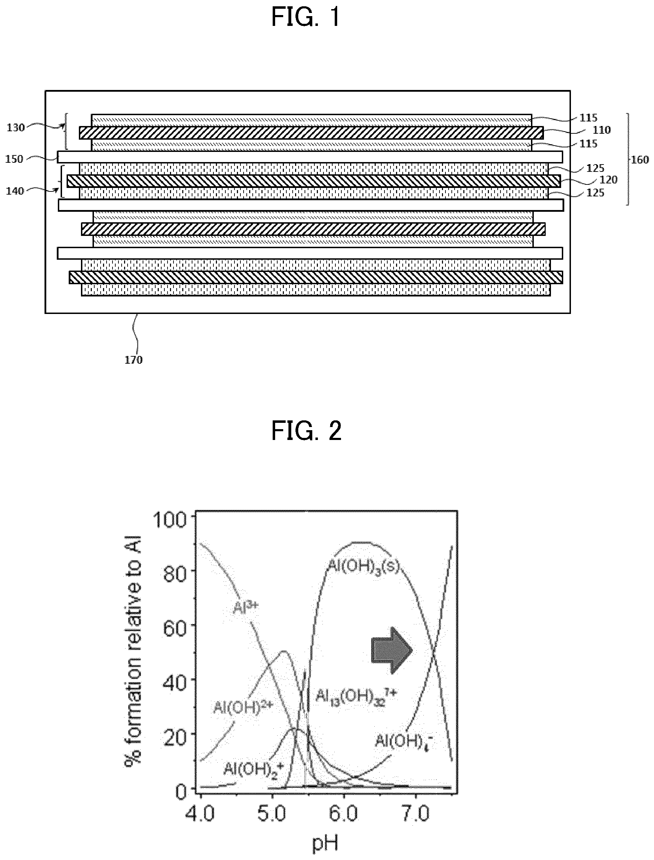

FIG. 1 is a cross-sectional view illustrating a lithium secondary battery in accordance with exemplary embodiments.

Referring to FIG. 1, a lithium secondary battery includes a cathode 130 and an anode 140. In some embodiments, a separation layer 150 may be interposed between the anode and the cathode.

The cathode 130 may include a cathode current collector 110 and a cathode active material layer 115 formed by coating a cathode active material on the cathode current collector 110.

The cathode active material includes a lithium composite oxide and a lithium-aluminum-sulfur-boron oxide formed on a surface of the lithium composite oxide.

The lithium composite oxide may be an oxide including lithium and other elements such as a transition metal.

In exemplary embodiments, the lithium composite oxide may include nickel. Nickel may be included in an excess amount among elements except for lithium and oxygen of the lithium composite oxide.

The term 'excess' used herein may refer to the largest mole fraction or content among elements other than lithium and oxygen.

Nickel may serve as a metal associated with a capacity of a lithium secondary battery. In exemplary embodiments, nickel may be included in the excess amount among elements other than lithium and oxygen to significantly improve the capacity of the secondary battery.

In exemplary embodiments, a mole fraction of nickel among elements other than lithium and oxygen of the lithium composite oxide may be 0.7 or more.

In exemplary embodiments, the lithium composite oxide may be represented by Chemical Formula 1 below.

[Chemical Formula 1] Li_{α}Ni_{y}M_{z}O_{2-β}

In Chemical Formula 1, M may include at least one selected from the group consisting of Co, Mn, Ti, Zr, Al, Sr and W. In Chemical Formula 1, 0.7≤α≤1.1,-0.1≤β≤0.5, 0.7≤y≤0.98, and 0.98<y+z≤1.1.

For example, as the content of nickel increases, capacity and power of a lithium secondary battery may be improved. However, an excessive content of nickel may cause degradation of life-span, and may be disadvantageous from an aspect of mechanical and electrical stability. For example, if the content of nickel is excessively increased, defects such as ignition and short circuit may not be sufficiently suppressed when penetration by an external object occurs.

Thus, according to exemplary embodiments, manganese (Mn) may also be distributed throughout a particle to compensate for chemical and mechanical instability caused by nickel.

Manganese (Mn) may serve as a metal related to mechanical and electrical stability of the lithium secondary battery. For example, manganese may suppress or reduce the defects such as ignition and short circuit that occur when the cathode is penetrated by the external object, and may increase the life-span of the lithium secondary battery. Additionally, cobalt (Co) may serve as a metal associated with conductivity or resistance of the lithium secondary battery.

If the mole fraction of the nickel mole fraction is less than 0.7, capacity and power may be excessively reduced. If the mole fraction of nickel exceeds 0.98, life-span and mechanical stability may be deteriorated.

In some embodiments, the mole fraction of nickel may be 0.8 or more, 0.83 or more, 0.85 or more, 0.88 or more, 0.90 or more, or 0.92 or more.

In some embodiments, in Chemical Formula 1, Mz is represented as CoₐMn_{b}M'_{c}. M' may include at least one element selected from the group consisting of Ti, Zr, Al, Sr, and W, and 0.05≤a≤0.2, 0.03≤ b≤0.2, 0.98<y+a+b+c≤1.1. In this case, the compound of Chemical Formula 1 is an NCM-based active material containing nickel, cobalt and manganese as main components, and may provide balanced properties in power, capacity, life-span and stability.

In some embodiments, the lithium composite oxide may have a secondary particle structure formed by aggregation of primary particles (e.g., a crystal of the compound of Chemical Formula 1). An average particle diameter (D₅₀) of the lithium composite oxide may be in a range from about 6 µm to about 25 µm, preferably from about 10 µm to 16 µm.

For example, a nickel component exposed on a surface of the lithium composite oxide may react with an air or a moisture to be decomposed into lithium hydroxide, lithium carbonate, nickel oxide, etc., thereby generating by-products. Further, nickel ions exposed to the surface may react with an electrolyte to cause a phase transition in a surface layer portion of the particle, and may transform a crystal structure.

In exemplary embodiments, the lithium-aluminum-sulfur-boron oxide (hereinafter, may be abbreviated as LASBO) is formed on the surface of the lithium composite oxide. The lithium-aluminum-sulfur-boron oxide may reduce an energy required for intercalation-deintercalation of lithium ions on the surface of the cathode active material. In this case, power and capacity of the secondary battery may be improved.

The cathode active material may include particles including the lithium composite oxide and the lithium-aluminum-sulfur-boron oxide. For example, an amount of the particles based on the total weight of the cathode active material may be 50 weight percent (wt%) or more. Preferably, the amount of the particles based on the total weight of the cathode active material may be 60 wt% or more, 70 wt% or more, 80 wt% or more, or 90 wt% or more.

In an embodiment, the cathode active material may essentially consist of the particles.

For example, an oxidation number of Al included in the lithium-aluminum-sulfur-boron oxide may be +3, and an ionic radius of Al included in the lithium-aluminum-sulfur-boron oxide may be similar to those of Ni, Co and Mn. Thus, Al may easily substitute trivalent Ni, Co and Mn to be doped into a surface region of the lithium composite oxide.

Al has a fixed oxidation number of +3, and may prevent a structural collapse due to a change in the oxidation number of a transition metal present on the surface of the lithium composite oxide during storage and use of the secondary battery. Further, Al may react with fluorine in the electrolyte of the secondary battery to form an AlF₃ coating layer, thereby suppressing side reactions with the electrolyte and stabilizing the surface structure of the cathode active material. Accordingly, life-span and high temperature stability of the secondary battery may be improved.

In some embodiments, the lithium-aluminum-sulfur-boron oxide is present at an interface between the primary particles within an inner region of the secondary particle.

For example, a sulfur component of the lithium-aluminum-sulfur-boron oxide is coated on the interface between the primary particles to reduce the side reaction between the electrolyte and the cathode active material which may occur when the electrolyte penetrates the interface of the primary particles. Additionally, generation of by-products caused when the cathode active material is exposed to air and reacts with the moisture to be decomposed into lithium hydroxide, lithium carbonate, nickel oxide, etc., may be prevented.

For example, the surface of the cathode active material may become smooth by a boron component of the lithium-aluminum-sulfur-boron oxide. The boron component may fill an unevenness existing on the surface of the lithium composite oxide and may form a substantially smooth surface of the active material. In this case, a specific surface area of the cathode active material may be reduced, so that the side reaction with the electrolyte may be suppressed. Accordingly, life-span and storage properties of the cathode active material may be improved.

In some embodiments, the lithium-aluminum-sulfur-boron oxide may be present as particles or aggregates spaced apart from each other on the surface of the lithium composite oxide.

In some embodiments, the lithium-aluminum-sulfur-boron oxide may form a coating layer covering a surface of the lithium composite oxide. The coating layer may at least partially cover the surface of the lithium composite oxide. In an embodiment, the coating layer may cover a substantially entire surface of the lithium composite oxide.

In exemplary embodiments, the lithium-aluminum-sulfur-boron oxide may be amorphous. In this case, the surface of the lithium composite oxide may be more uniformly coated, and thus the surface of the cathode active material may be uniformly protected.

In some embodiments, the aluminum component, the sulfur component and/or the boron component of the lithium-aluminum-sulfur-boron oxide may be inserted and doped to a predetermined depth from the surface of the lithium composite oxide.

The lithium-aluminum-sulfur-boron oxide may be present in a non-crystallized amorphous state, an Al content relative to a weight of the lithium composite oxide may be in a range from 500 ppm to 3,000 ppm, an S content may be in a range from 200 ppm to 3,000 ppm, and a B content may be in a range from 300 ppm to 1,000 ppm. Within the above range, excessive reduction of capacity and power properties of the secondary battery by the coating layer may be prevented.

For example, a thickness of the lithium-aluminum-sulfur-boron oxide coating layer may be in a range from 20 nm to 50 nm. In the thickness range, a lithium transfer ability may be maintained while protecting the surface structure of the cathode active material.

Hereinafter, a method of manufacturing the above-described cathode active material is provided.

In exemplary embodiments, active material metal sources may be prepared. The active material metal sources may include a nickel source, a manganese source and a cobalt source.

Examples of the nickel source include nickel sulfate (NiSO₄), nickel hydroxide (Ni(OH)₂), nickel nitrate (Ni(NO₃)₂), nickel acetate (Ni(CH₃CO₂)₂), a hydrate thereof, etc. Examples of the manganese source include manganese sulfate (MnSO₄), manganese hydroxide (Mn(OH)₂), manganese acetate (Mn(CH₃CO₂)₂, a hydrate thereof, etc. Examples of the cobalt source include cobalt sulfate (CoSO₄), cobalt nitrate (Co(NO₃)₂), cobalt carbonate (CoCO₃), a hydrate thereof.

The active material metal sources may be mixed together with a precipitating agent and/or a chelating agent at a ratio satisfying the content or concentration ratio of each metal described with reference to Chemical Formula 1 above to prepare an aqueous solution. The aqueous solution may be co-precipitated in a reactor to prepare a transition metal precursor (e.g., an NCM precursor).

The precipitating agent may include an alkaline compound such as sodium hydroxide (NaOH), sodium carbonate (Na₂CO₃), etc. The chelating agent may include, e.g., aqueous ammonia (e.g., NH₄OH), ammonium carbonate (e.g., NH₃HCO₃), etc.

Thereafter, a lithium source and the transition metal precursor may be mixed and reacted by a co-precipitation method to form a lithium complex. The lithium source may include, e.g., lithium carbonate, lithium nitrate, lithium acetate, lithium oxide, lithium hydroxide, etc. These may be used alone or in combination of two or more.

The lithium complex may be subjected to a first firing to form a lithium composite oxide. The first firing may be performed, e.g., at a temperature ranging from 650 °C to 800 °C in an oxygen-containing atmosphere.

A lithium-aluminum-sulfur hydroxide may be partially formed on a surface of the lithium composite oxide. The lithium-aluminum-sulfur hydroxide may be present as particles and/or aggregates isolated from each other on the surface of the lithium composite oxide, or may form a coating layer covering the surface of the lithium composite oxide.

In exemplary embodiments, the lithium-aluminum-sulfur hydroxide may be formed through a wet reaction.

In some embodiments, a basic reaction solution including an aluminum source and a sulfur source may be prepared. The basic reaction solution may be prepared by dissolving the aluminum source and the sulfur source in water.

The aluminum source may include aluminum hydroxide (Al(OH)₃) and/or ammonium aluminum sulfate ((NH₄)Al(SO₄)₂).

The sulfur source may include lithium sulfate (Li₂SO₄), sodium sulfite (Na₂SO₃), sodium sulfate (Na₂SO₄), sodium thiosulfate (Na₂S₂O)₃), sodium dithionite (Na₂S₂O₄), sodium metabisulfite (Na₂S₂O₃), sodium dithionate (Na₂S₂O₆), sodium pyrosulfate (Na₂S₂O₇), sodium persulfate (Na₂S₂O₈), etc. These may be used alone or in a combination thereof.

In some embodiments, lithium ions from the lithium source dissolved on the surface of the lithium composite oxide may react to form the lithium-aluminum-sulfur hydroxide. In an embodiment, the lithium source may be additionally supplied to promote the formation of the lithium-aluminum-sulfur hydroxide.

In exemplary embodiments, a pH of the basic reaction solution may be in a range from 9 to 13.

FIG. 2 is a graph showing a solubility of aluminum according to an acidity (pH).

Referring to FIG. 2, in an aqueous solution having a pH of 7 or higher, a fraction of aluminum present in a phase of Al(OH)₄⁻ rapidly increases. In an aqueous solution having a pH 8 or higher, a fraction of other aluminum phases such as Al(OH)₃, etc., rapidly decreases, so that the fraction of aluminum of the phase of Al(OH)₄⁻becomes substantially dominant

If the pH of the basic reaction solution is in a range from 9 to 13, the lithium-aluminum-sulfur hydroxide may be easily formed. Preferably, the pH may be in a range from 11 to 12.

In exemplary embodiments, the pH of the basic reaction solution may be adjusted using a widely used basic material. In some embodiments, the pH of the basic reaction solution may be adjusted by a sulfur source containing an alkali metal. In this case, the sulfur source may include lithium sulfate (Li₂SO₄), sodium sulfite (Na₂SO₃), sodium sulfate (Na₂SO₄), sodium thiosulfate (Na₂S₂O)₃), sodium dithionite (Na₂S₂O₄), sodium metabisulfite (Na₂S₂O₅), sodium dithionate (Na₂S₂O₆), sodium pyrosulfate (Na₂S₂O₇), sodium persulfate (Na₂S₂O₈), etc.

The sulfur source containing the alkali metal may be added, so that the solubility of aluminum hydroxide (Al(OH)₃) may be increased and aluminum may be converted into an ionic phase. In some embodiments, ammonium aluminum sulfate ((NH₄)Al(SO₄)₂ · 12H₂O) may be used as an aluminum source to promote uniform coating of aluminum and sulfur ions on the surface of the cathode active material and the interface of the primary particles.

As described above, lithium nickel oxide exposed on the surface of the lithium composite oxide particle may react with air or moisture during the preparation and use of the cathode active material to be decomposed into lithium hydroxide (LiOH), lithium carbonate (Li₂CO₃), nickel oxide (NiO), etc., and produce by-products. Additionally, nickel ions exposed on the surface may react with the electrolyte to cause a phase transition in a surface layer portion of the particle and transform a crystal structure.

In exemplary embodiments, the lithium-aluminum-sulfur hydroxide may be formed by a wet method using the water-based basic reaction solution. The byproduct may be removed during the wet reaction. In this case, an additional washing process may be omitted, and process efficiency may be improved. Further, washing and aluminum-sulfur coating may be performed substantially together to suppress an increase of a specific surface area.

The lithium composite oxide may be mixed with the basic reaction solution and dried to form the lithium-aluminum-sulfur hydroxide.

In some embodiments, the drying may be performed at a temperature in a range from 110°C to 200°C, preferably from 110°C to 150°C. In this temperature range, the substantially non-crystallized lithium-aluminum-sulfur hydroxide may be formed. For example, when the drying temperature exceeds 200 °C, crystallization of the lithium-aluminum-sulfur hydroxide may occur, and uniformity of the coating may be degraded.

In exemplary embodiments, the lithium composite oxide having the lithium-aluminum-sulfur hydroxide formed on the surface may be reacted with a boron source in a dry method.

Accordingly, a lithium-aluminum-sulfur-boron oxide may be formed from the lithium-aluminum-sulfur hydroxide. For example, the lithium-aluminum-sulfur hydroxide may be converted into the lithium-aluminum-sulfur-boron oxide. Accordingly, the cathode active material in which the lithium-aluminum-sulfur-boron oxide is formed on the surface of the lithium composite oxide may be achieved.

The dry-based reaction may be performed in a non-solution phase. The dry-based reaction may be performed at a temperature ranging from 250°C to 400°C. For example, in the above temperature range, the amorphous lithium-aluminum-sulfur-boron oxide may be formed. The amorphous lithium-aluminum-sulfur-boron oxide may uniformly coat the surface of the lithium composite oxide.

The dry-based reaction may be performed by mixing (stirring) reaction sources under high temperature or elevated temperature conditions. For example, the lithium composite oxide having the lithium-aluminum-sulfur hydroxide formed on a surface thereof and a boron source may be mixed while raising a temperature in a reactor to form the cathode active material for a lithium secondary battery.

In some embodiments, the dry-based reaction may be performed in an inert atmosphere or an oxygen-containing atmosphere. The inert atmosphere may include a nitrogen or argon gas atmosphere. The oxygen-containing atmosphere may include, e.g., an oxidizing atmosphere having an oxygen content of about 20% or more.

In exemplary embodiments, the boron source may include a boric acid-based compound such as metaboric acid (HBO₂), boric acid (H₃BO₃), tetraboric acid (H₂B₄O₇), triethyl borate (B(OCH₂CH₃)₃), etc.

In some embodiments, the boron source may be used in an amount ranging from 100 ppm to 1,000 ppm based on a weight of the lithium composite oxide. In the above content range, the cathode active material may be uniformly coated while maintaining electrical properties.

The above-described cathode active material may be mixed and stirred with a binder, a conductive material and/or a dispersive agent in a solvent to form a slurry. The slurry may be coated on the cathode current collector 110, and then dried and pressed to form the cathode 130.

The cathode current collector 110 may include stainless-steel, nickel, aluminum, titanium, copper or an alloy thereof. Preferably, aluminum or an alloy thereof may be used.

The binder may include an organic based binder such as a polyvinylidene fluoride-hexafluoropropylene copolymer (PVDF-co-HFP), polyvinylidenefluoride (PVDF), polyacrylonitrile, polymethylmethacrylate, etc., or an aqueous based binder such as styrene-butadiene rubber (SBR) that may be used with a thickener such as carboxymethyl cellulose (CMC).

For example, a PVDF-based binder may be used as a cathode binder. In this case, an amount of the binder for forming the cathode may be reduced, and an amount of the cathode active material may be relatively increased. Thus, capacity and power of the lithium secondary battery may be further improved.

The conductive material may be added to facilitate electron mobility between active material particles. For example, the conductive material may include a carbon-based material such as graphite, carbon black, graphene, carbon nanotube, etc., and/or a metal-based material such as tin, tin oxide, titanium oxide, a perovskite material such as LaSrCoO₃ or LaSrMnO₃, etc.

The anode 140 may include an anode current collector 120 and an anode active material layer 125 formed by coating an anode active material on a surface of the anode current collector 120.

The anode active material may include a material commonly used in the related art which may be capable of adsorbing and ejecting lithium ions. For example, a carbon-based material such as a crystalline carbon, an amorphous carbon, a carbon complex or a carbon fiber, a lithium alloy, a silicon (Si)-based compound, tin, etc., may be used.

The amorphous carbon may include a hard carbon, cokes, a mesocarbon microbead (MCMB) fired at a temperature of 1,500 °C or less, a mesophase pitch-based carbon fiber (MPCF), etc. The crystalline carbon may include a graphite-based material such as natural graphite, graphitized cokes, graphitized MCMB, graphitized MPCF, etc.

The lithium alloy may further include aluminum, zinc, bismuth, cadmium, antimony, silicon, lead, tin, gallium, indium, etc.

The anode current collector 120 may include, e.g., gold, stainless steel, nickel, aluminum, titanium, copper or an alloy thereof, preferably may include copper or a copper alloy.

In some embodiments, a slurry may be prepared by mixing and stirring the anode active material with a binder, a conductive material and/or a dispersive agent in a solvent. The slurry may be coated on the anode current collector 120, and then dried and pressed to form the anode 140.

The binder and the conductive material substantially the same as or similar to those used for the cathode active material layer may be used in the anode 140. In some embodiments, the binder for forming the anode may include an aqueous binder such as styrene-butadiene rubber (SBR), and carboxymethyl cellulose (CMC) may also be used as a thickener.

The separation layer 150 may be interposed between the cathode 130 and the anode 140. The separation layer 150 may include a porous polymer film prepared from, e.g., a polyolefin-based polymer such as an ethylene homopolymer, a propylene homopolymer, an ethylene/butene copolymer, an ethylene/hexene copolymer, an ethylene/methacrylate copolymer, or the like. The separation layer 150 may also include a non-woven fabric formed from a glass fiber with a high melting point, a polyethylene terephthalate fiber, or the like.

In some embodiments, an area and/or a volume of the anode 140 (e.g., a contact area with the separation layer 150) may be greater than that of the cathode 130. Thus, lithium ions generated from the cathode 130 may be easily transferred to the anode 140 without a loss by, e.g., precipitation or sedimentation. Accordingly, the effects of improving power and stability by using the above-described cathode active material may be more easily implemented.

In exemplary embodiments, an electrode cell 160 may be defined by the cathode 130, the anode 140 and the separation layer 150, and a plurality of the electrode cells 160 may be stacked to form an electrode assembly that may have e.g., a jelly roll shape. For example, the electrode assembly may be formed by winding, laminating or folding of the separation layer.

The electrode assembly may be accommodated together with an electrolyte in an outer case 170 to define the lithium secondary battery. In exemplary embodiments, a non-aqueous electrolyte may be used as the electrolyte.

The non-aqueous electrolyte may include a lithium salt and an organic solvent. The lithium salt may be represented by Li⁺X⁻ , and an anion of the lithium salt X⁻ may include, e.g., F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, etc.

The organic solvent may include, e.g., propylene carbonate (PC), ethylene carbonate (EC), diethyl carbonate (DEC), dimethyl carbonate (DMC), ethylmethyl carbonate (EMC), methylpropyl carbonate, dipropyl carbonate, dimethyl sulfoxide, acetonitrile, dimethoxy ethane, diethoxy ethane, vinylene carbonate, sulfolane, gamma-butyrolactone, propylene sulfite, tetrahydrofuran, etc. These may be used alone or in a combination of two or more therefrom.

Electrode tabs may be formed from the cathode current collector 110 and the anode current collector 120 included in each electrode cell to extend to one side of the outer case 170. The electrode tabs may be welded together with the one side of the outer case 170 to be connected to an electrode lead that may be extended or exposed to an outside of the outer case 170.

The lithium secondary battery may be manufactured in, e.g., a cylindrical shape using a can, a square shape, a pouch shape or a coin shape.

Hereinafter, preferred embodiments are proposed to more concretely describe the present invention.

### Preparation of cathode active material

### Example 1

### (1) Wet-based reaction

Al(OH)₃ was dissolved in the same amount of water as that of a lithium composite oxide so that an Al concentration became 1,000 ppm. The lithium composite oxide (LiNi_{0.83}Co_{0.12}Mn_{0.03}O₂) and lithium sulfate (Li₂SO₄·H₂O) as a sulfur source were added to the Al(OH)₃ solution, stirred for 10 minutes, and then filtered. An amount (number of moles) of added lithium sulfate (Li₂SO₄·H₂O) was the same as the amount (number of moles) of Al.

The filtered lithium composite oxide was dried at 130 °C for 24 hours to form a lithium-aluminum-sulfur hydroxide on a surface of the lithium composite oxide.

### (2) Dry-based reaction

The dried lithium composite oxide and 500 ppm of H₃BO₃ based on a weight of the lithium composite oxide were put into a kiln in an oxygen atmosphere, and a temperature was raised at a rate of 2 °C/min while performing a dry mixing.

The temperature was raised to 300 °C and maintained for 10 hours to prepare a lithium composite oxide having a lithium-aluminum-sulfur-boron oxide formed on a surface thereof.

### Example 2

Sodium sulfite (Na₂SO₃) was used as a sulfur source containing an alkali metal to facilitate an ionization by increasing a solubility of Al(OH)₃. Water corresponding to 10% of the cathode active material was additionally added to the filtered lithium composite oxide and re-filtered to selectively remove only Na ions while maintaining Al ions in a wet coating solution.

Thereafter, a cathode active material was prepared by the same method as that in Example 1.

### Example 3

A cathode active material was prepared by the same method as that in Example 2, except that sodium sulfate (Na₂SO₄) was used as the sulfur source containing an alkali metal.

### Example 4

A cathode active material was prepared by the same method as that in Example 2, except that sodium thiosulfate (Na₂S₂O₃) was used as the sulfur source containing an alkali metal.

### Example 5

A cathode active material was prepared by the same method as that in Example 2, except that sodium dithionite (Na₂S₂O₄) was used as a sulfur source containing an alkali metal.

### Example 6

A cathode active material was prepared by the same method as that in Example 2, except that sodium metabisulfite (Na₂S₂O₃) was used as the sulfur source containing an alkali metal.

### Example 7

A cathode active material was prepared by the same method as that in Example 2, except that sodium dithionate (Na₂S₂O₆) was used as a sulfur source containing an alkali metal.

### Example 8

A cathode active material was prepared by the same method as that in Example 2, except that sodium pyrosulfate (Na₂S₂O₇) was used as the sulfur source containing an alkali metal.

### Example 9

A cathode active material was prepared by the same method as that in Example 2, except that sodium persulfate (Na₂S₂O₈) was used as the sulfur source containing an alkali metal.

### Example 10

A cathode active material was prepared by the same method as that in Example 1, except that ammonium aluminum sulfate ((NH₄)Al(SO₄)₂·12H₂O) containing NH₄ (amine) for maintaining a basic pH, and Al and S ions serving as a coating source was used so that an Al concentration became 1,000 ppm instead of using Al(OH)₃ and the sulfur source containing an alkali metal.

### Comparative Example 1

1,000 ppm of Al₂O₃ having a particle diameter ranging from about 30 nm to 70 nm was added to the lithium composite oxide used in Example 1 in a dry high-speed mixer, and uniformly mixed for 5 minutes. The mixture was placed in a kiln and heated to 700 °C at a heating rate of 2 °C/min, and maintained at 700 °C for 10 hours. Oxygen was continuously passed through at a flow rate of 10 mL/min while raising and maintaining the temperature. After the firing, natural cooling was performed to room temperature, and grinding and classification were performed to prepare a dry-based Al₂O₃ coated cathode active material.

A cathode active material was prepared by the same method as that in Example 1, except that an aluminum-containing coating layer was formed by a dry-based coating (not wet-based reaction) and the high temperature heat treatment process (700°C) as described above.

### Comparative Example 2

A cathode active material was prepared by the same method as that in Example 1, except that the Al source (Al(OH)₃) was added, but the sulfur (S) source was not added.

### Comparative Example 3

A cathode active material was prepared by the same method as that in Example 10, except that the Al source and the sulfur source were used, but aluminum sulfate (Al₂(SO₄)₃) devoid of NH₄(amine) for providing basicity was used.

### Experimental Example 1: EDS (Energy-dispersive X-ray spectroscopy) analysis

### 1) SEM and EDS analysis

The surface of the cathode active material and distribution of the coating source was analyzed by a scanning electron microscopy (SEM) image and an energy-dispersive X-ray spectroscopy (EDS), respectively. Specifically, the measurement was performed under conditions of an acceleration voltage of 15kV, and the EDS was measured under conditions of a pulse throughput of 60eV/count and a working distance of 10mm using an equipment interconnected with the SEM.

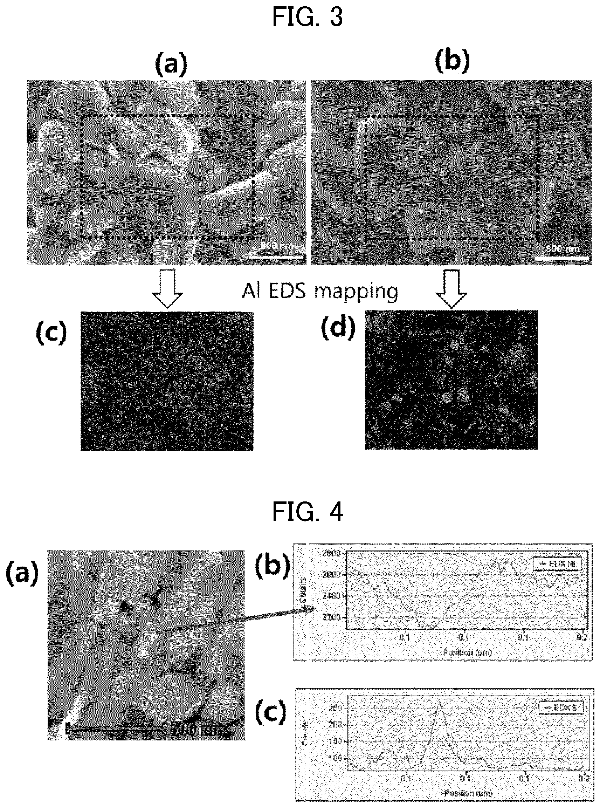

FIG. 3 includes SEM images of surfaces of the lithium composite oxides and EDS images showing distributions of aluminum in Example 1 and Comparative Example 1.

High magnification (20,000 times or more) SEM images ((a) and (b) of FIG. 3) were obtained from the cathode active materials of Example 1 and Comparative Example 1. Images of (c) and (d) were obtained by mapping an aluminum component through the EDS analysis for the dotted rectangular area shown in (a) and (b) of FIG. 3.

In the case of Comparative Example 1 where the aluminum source was dry-coated and subjected to the high-temperature heat treatment, the aluminum source did not react uniformly with the lithium composite oxide and partially agglomerated on the surface through the EDS analysis ((d) of FIG. 3). In the cathode active material of Example 1, the aluminum component was uniformly distributed on the surface compared to that in Comparative Example 1 to form a substantial coating.

A Pt coating was performed during a sample pretreatment for the SEM analysis, but EDS peaks of Pt and S were not clearly separated and partially overlap. Accordingly, an EDS mapping result of S alone was not obtained.

### 2) TEM and EDS analysis

The presence of Al and S coatings at an interface between the primary particles was determined and evaluated as follows using a transmission electron microscope (TEM) image and an EDS-mapping image obtained by the EDS.
O: Al and S coating detected
×: Al and S coating not detected

FIG. 4 includes a transmission electron microscope (TEM) image of a cross-section of a lithium composite oxide on which a coating layer is formed and graphs showing distributions of nickel and sulfur analyzed by an EDS line scanning.

Specifically, a TEM image of the cathode active material of Example 1 was obtained ((a) of FIG. 4), and the interface between the primary particles was analyzed using the EDS line scanning ((b) and (c) of FIG. 4).

To determine the presence or absence of the coating at the interface between the primary particles, a line scanning was performed by the EDS analysis at a region corresponding the straight line in (a) of FIG. 4. It was confirmed that a Ni strength was lowered at the interface between the particles. It was confirmed that an S strength was increased only at the point (interface) where the Ni strength was decreased, and it was predicted that the S component was coated at the interface.

Additionally, referring to (b) and (c) of FIG. 4, a peak intensity at the interface of the S component was measured to be greater than an average value of peak intensities of Ni within an inside of the primary particle except for the interface area.

In Comparative Example 1 using alumina (Al₂O₃) as the dry coating and Comparative Example 2 where only aluminum hydroxide (Al(OH)₃) was added without adding the sulfur source containing an alkali metal, Al was not measured at the interface between the primary particles and S was not measured because the S source was not added.

### Experimental Example 2: Measurement of eluted element content (ICP)

0.01 g of the cathode active material prepared as described above was completely dissolved in 40 ml of hydrochloric acid (2%) for 3 hours. After diluting the solution about 10 times, elements contained in the entire solution were detected by an inductively coupled plasma-optical emission spectroscopy (ICP-OES; Optima 7300DV, PerkinElmer).

In Examples 1 to 9 where aluminum hydroxide (Al(OH)₃) as the aluminum source and the sulfur source containing an alkali metal for ionizing the aluminum source were used, and Example 10 where a coating material containing a pH adjusting material was used, a pH of the wet-coating solution was maintained at 9 or higher, and Al and S ions were present in the coating solution. Thus, lithium desorption was prevented during the reaction in an aqueous solution, and a molar ratio of Li to Ni-Co-Mn of the cathode active material was maintained at 1.00 or more in the ICP analysis.

In Comparative Example 1 where the high-temperature heat treatment (700 °C) was performed using alumina (Al₂O₃), Al was diffused into a structure of the surface of the cathode active material and the Li molar ratio was maintained at 1.00 or more similarly to cases of Examples. However, in Comparative Example 2 where the sulfur source was omitted and Comparative Example 3 where aluminum sulfate (Al₂(SO₄)₃) forming an acidic condition was used, the lithium desorption was caused from the surface of the cathode active material, and the Li molar ratio dropped to less than 1.00.

The evaluation results of Experimental Example 1 and Experimental Example 2 are shown in Table 1 below.

**[Table 1]**

| | coating source | | interface coating | | ICP measurement |
|---|---|---|---|---|---|
| | Al source | S source | Al | S | Li molar ratio |
| Example 1 | Al(OH)₃ | Li₂SO₄ | ○ | ○ | 1.003 |
| Example 2 | Al(OH)₃ | Na₂SO₃ | ○ | ○ | 1.004 |
| Example 3 | Al(OH)₃ | Na₂SO₄ | ○ | ○ | 1.003 |
| Example 4 | Al(OH)₃ | Na₂S₂O₃ | ○ | ○ | 1.002 |
| Example 5 | Al(OH)₃ | Na₂S₂O₄ | ○ | ○ | 1.003 |
| Example 6 | Al(OH)₃ | Na₂S₂O₃ | ○ | ○ | 1.002 |
| Example 7 | Al(OH)₃ | Na₂S₂O₆ | ○ | ○ | 1.001 |
| Example 8 | Al(OH)₃ | Na₂S₂O₇ | ○ | ○ | 1.002 |
| Example 9 | Al(OH)₃ | Na₂S₂O₈ | ○ | ○ | 1.002 |
| Example 10 | AlNH₄(SO₄)₂·12H₂O | | ○ | ○ | 1.002 |
| Comparative Example 1 | Al₂O₃ | × | × | × | 1.005 |
| Comparative Example 2 | Al(OH)₃ | × | × | × | 0.980 |
| Comparative Example 3 | Al₂(SO₄)₃ | | ○ | ○ | 0.950 |

### Experimental Example 3: Measurement of residual lithium

2.5 g of the cathode active material of the above-described Examples and Comparative Examples was quantified in a 250 mL flask, 110 g of deionized water was added thereto, and then a magnetic bar was added to stir the mixture at a speed of 60 rpm for 10 minutes. After filtering using a reduced pressure flask, 100 g of the solution was collected. The collected solution was placed in an auto titrator container, and a residual lithium (LiOH and Li₂CO₃) content in the solution was measured by an automatic titration using 0.1N HCl based on a Wader Method.

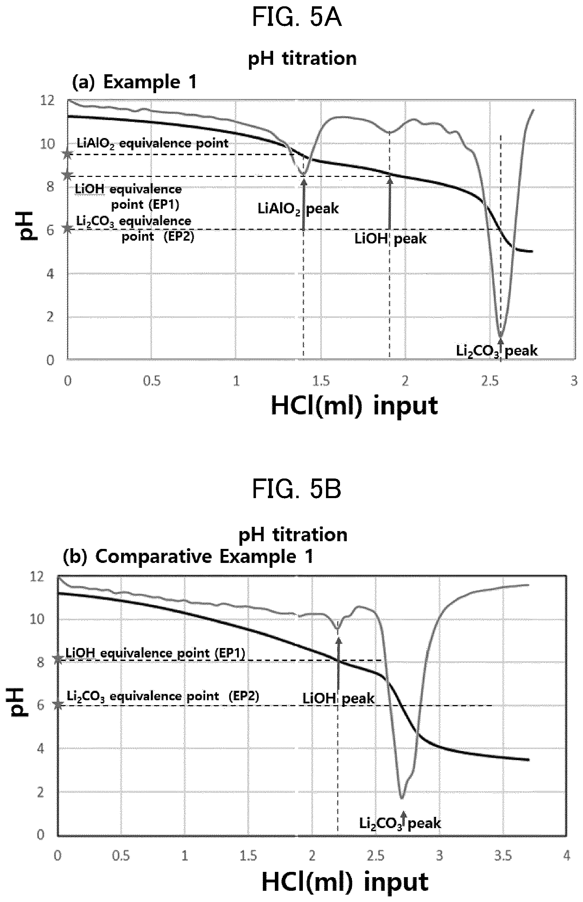

FIGS. 5A to 5D are graphs showing a titration of a residual lithium of cathode active materials according to Examples and Comparative Examples.

Specifically, FIGS. 5A to 5D are graphs showing a change of a pH value (a black curve) and an amount of change of the pH value (a gray curve) while titrating with HCl. From the graphs, an amount of the residual lithium and detection of an Al peak are shown in Table 2 below.

**[Table 2]**

| | coating source | | residual lithium | | |
|---|---|---|---|---|---|
| | Al source | S source | LiOH (ppm) | Li₂CO₃ (ppm) | Al peak |
| Example 1 | Al(OH)₃ | Li₂SO₄ | 1340 | 2000 | ○ |
| Example 2 | Al(OH)₃ | Na₂SO₃ | 1120 | 1800 | ○ |
| Example 3 | Al(OH)₃ | Na₂SO₄ | 1530 | 1950 | ○ |
| Example 4 | Al(OH)₃ | Na₂S₂O₃ | 1420 | 1750 | ○ |
| Example 5 | Al(OH)₃ | Na₂S₂O₄ | 1300 | 1200 | ○ |
| Example 6 | Al(OH)₃ | Na₂S₂O₃ | 1220 | 1420 | ○ |
| Example 7 | Al(OH)₃ | Na₂S₂O₆ | 1210 | 1330 | ○ |
| Example 8 | Al(OH)₃ | Na₂S₂O₇ | 1020 | 1420 | ○ |
| Example 9 | Al(OH)₃ | Na₂S₂O₈ | 1360 | 1010 | ○ |
| Example 10 | AlNH₄(SO₄)₂· 12H₂O | | 860 | 1800 | ○ |
| Comparative Example 1 | Al₂O₃ | × | 1550 | 1790 | × |
| Comparative Example 2 | Al(OH)₃ | × | 1700 | 2100 | × |
| Comparative Example 3 | Al₂(SO₄)₃ | | 3270 | 4500 | × |

The residual lithium may be present in the form of LiOH and Li₂CO₃ on the surface of the cathode active material, and may be titrated, e.g., according to Equations 1 and 2 below.

[Equation 1] LiOH [titration pH 8.5 ~ 8.0]: LiOH + HCl → LiCl + H2O

[Equation 2] Li₂CO₃ [titration pH about 6.0]: Li₂CO₃ + HCl → LiCl + LiHCO₃, LiHCO₃ + HCl → LiCl + H₂O + CO₂

FIG. 5B is a graph showing an titration pH of the cathode active material of Comparative Example 1.

As described above, the cathode active material may have an equivalence point based on the pH titration graph and Equations 1 and 2 due to the residual lithium. For example, as shown in FIG. 5B, a first equivalence point (EP1) and a second equivalence point (EP2) appeared at pH 8.5 and pH 6.0, respectively, which were the same as peak positions of the gray-scaled graph.

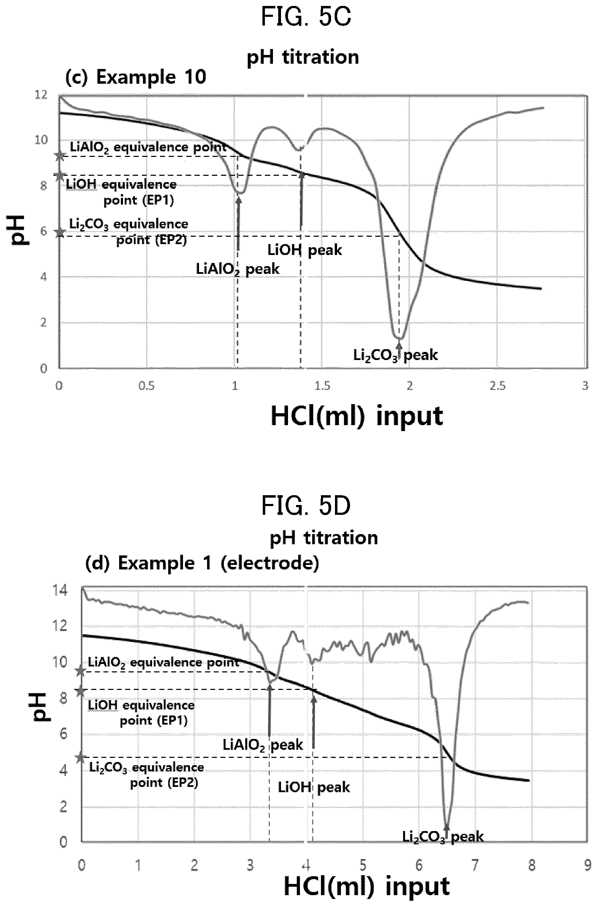

FIGS. 5A and 5C show graphs of titration pHs of the cathode active materials of Examples 1 and 10, respectively.

As shown in FIGS. 5A and 5C, additional equivalence points were observed in a pH range above 8.5 (e.g., from 8.5 to 10.0, or from 8.5 to 9).

The additional equivalence point was confirmed as a equivalence point due to LiAlO₂ according to Equation 3 below.

[Equation 3] LiAlO₂ [titration pH 9.0]: LiAlO₂ + HCl +H₂O → LiCl + Al(OH)₃

In the samples of Examples, an amorphous coating layer was eluted in a pretreatment process for measuring the residual lithium, and the equivalence point was observed at the titration pH graph. However, in the case of Comparative Example 1 where the dry source was heat treated at high temperature, it is predicted that the Al element was integrated into an internal structure of the cathode active material at high temperature, or a remaining Al element had a crystalline form and was not eluted during the residual lithium pretreatment process.

FIG. 5D is a graph showing a titration graph using a cathode from a secondary battery sample prepared using the cathode active material of Example 1 as described below after a formation process. Specifically, the formation process was performed and the battery sample was disassembled. The cathode was only washed using DMC (dimethyl carbonate), dried, and then heat treated in an oxygen at 300 °C to remove a binder. Thereafter, only the cathode active material was collected and the residual lithium was measured. An equivalence point created from LiAlO₂ was also confirmed in the cathode active material obtained by disassembling the battery after the formation charging and discharging.

In Comparative Example 3, the Al₂(SO₄)₃ source was present in an acidic aqueous solution state, and the lithium desorption from the cathode active material was accelerated. Accordingly, a LiOH peak of the residual lithium was predominantly observed and a peak of LiAlO₂ was not substantially separated.

### Experimental Example 4: Binding Energy Measurement (XPS)

The cathode active materials of the above-described Examples and Comparative Examples were analyzed using an X-ray photoelectron spectroscopy (XPS), and a binding energy value at a point where an S peak was formed was measured.

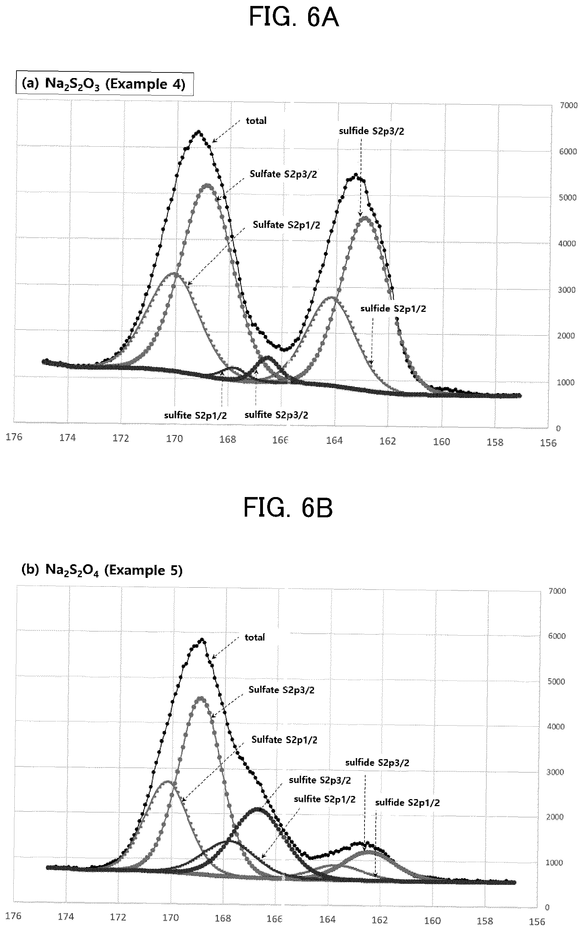

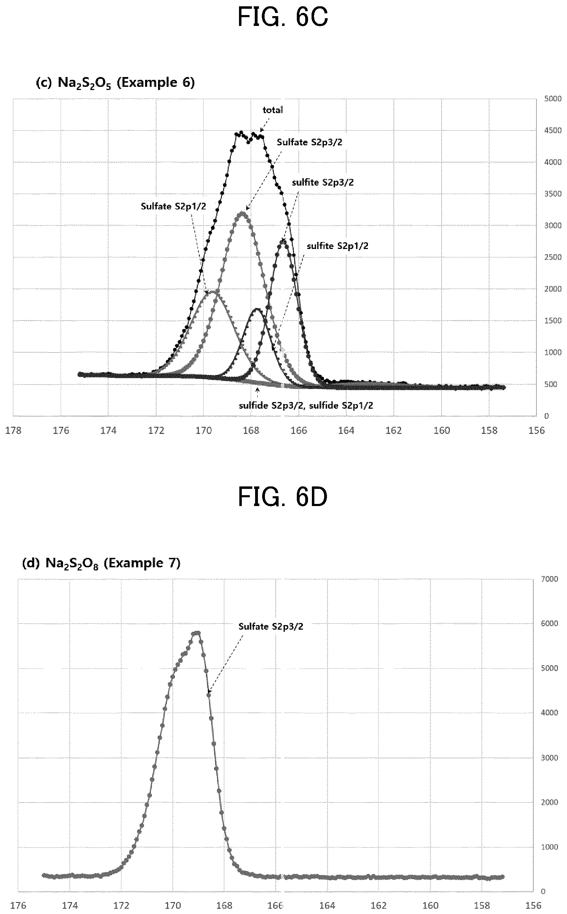

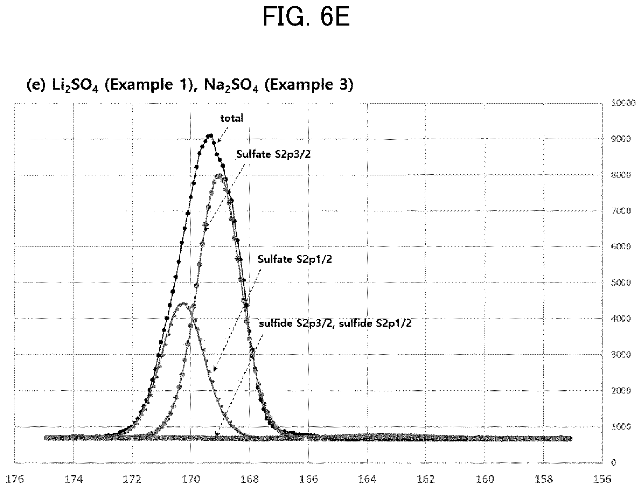

FIGS. 6A to 6E are XPS analysis graphs of a sulfur source containing an alkali metal used in Examples.

Referring to FIGS. 6A to 6E, portions of sulfide and sulfite were decreased and a portion of sulfate was increased in an order of Na₂S₂O₃, Na₂S₂O₄, Na₂S₂O₅ and Na₂S₂O₈.

A sulfide phase present on the surface of the cathode active material may react with moisture to generate a hydrogen sulfide (H₂S) gas or a sulfuric acid (H₂SO₄)-derived material, which may cause structural instability of the cathode active material. Therefore, it may be desirable to block the formation of the sulfide phase.

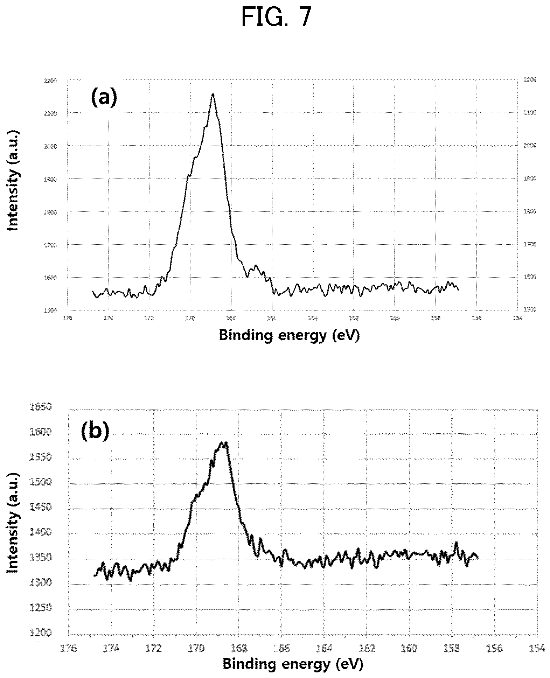

FIG. 7 is a surface XPS analysis graph of lithium composite oxides according to Example 1 and Example 4.

Referring to FIG. 7, in the case of Example 4 using the Na₂SO₃ source ((a) of FIG. 7), the sulfide phase was measured, but reacted with Al(OH)₃ in an aqueous solution so that the sulfide phase was converted into a sulfate phase (binding energy 169 eV) by the dry B coating.

In (a) of FIG. 7, a sulfite peak was observed around the binding energy of 167 eV, but a ratio of the sulfite phase (8.5%) was low relatively to the sulfate phase (91.5%) and degradation of a battery performance was prevented.

However, if a proportion of the sulfite phase exceeds 20%, by-products may be generated by the reaction with moisture contained in an electrolyte, thereby deteriorating battery properties.

In the case of Example 1 ((b) of FIG. 7) where Li₂SO₄ was used, only a stable sulfate phase was present.

### Experimental Example 5: Evaluation of battery properties

### (1) Fabrication of secondary battery

A cathode mixture was prepared by mixing the cathode active material of the above-described Examples and Comparative Examples, Denka Black as a conductive material, and PVDF as a binder in a mass ratio of 94:3:3, respectively. The cathode mixture was coated on an aluminum current collector, dried and pressed to prepare a cathode. An electrode density of the cathode was adjusted to 3.5 g/cc or more after the pressing

93 wt% of natural graphite as an anode active material, 5 wt% of KS6 as a flake type conductive material, 1 wt% of styrene-butadiene rubber (SBR) as a binder, and 1 wt% of carboxymethyl cellulose (CMC) as a thickener were mixed to form an anode slurry. The anode slurry was coated on a copper substrate, dried and pressed to prepare an anode.

The cathode and the anode prepared as described above were each notched by a predetermined size, and stacked with a separator (polyethylene, thickness: 25µm) interposed therebetween to form an electrode cell. Each tab portion of the cathode and the anode was welded. The welded cathode/separator/anode assembly was inserted in a pouch, and three sides of the pouch except for an electrolyte injection side were sealed. The tab portions were also included in sealed portions. An electrolyte was injected through the electrolyte injection side, and then the electrolyte injection side was also sealed. Subsequently, the above structure was impregnated for more than 12 hours.

The electrolyte was prepared by forming 1M LiPF₆ solution in a mixed solvent of ethylene carbonate (EC)/ethyl methyl carbonate (EMC)/diethylene carbonate (DEC) (25/45/30; volume ratio), and then 1 wt% of vinylene carbonate, 0.5 wt% of 1,3-propensultone (PRS) and 0.5 wt% of lithium bis(oxalato)borate (LiBOB) were added.

### (2) Evaluation on initial capacity

The lithium secondary batteries prepared according to Examples and Comparative Examples were charged (CC/CV 0.1C 4.3V 0.05C CUT-OFF) and discharged (CC 0.1C 3.0V CUT-OFF) once (CC: Constant Current, CV: Constant Voltage) to measure an initial discharge capacity.

The above measured 0.1C charge capacity was expressed as a percentage relative to the measured 0.1C discharge capacity to evaluate an initial efficiency as shown in Table 3 below.

### (3) Life evaluation

Charging (CC/CV 0.5C 4.3V 0.05C CUT-OFF) and discharging (CC 1.0C 3.0V CUT-OFF) at high temperature (45°C) for secondary batteries according to Examples and Comparative Examples were performed to measure an initial discharge capacity.

While repeating charge/discharge, the discharge capacity according to the number of charge/discharge cycles was divided by the initial discharge capacity to calculate a capacity retention (after 200 cycles).

The evaluation results are shown in Table 3 below.

**[Table 3]**

| | initial charge capacity (mAh/g) | initial discharge capacity (mAh/g) | initial efficiency(%) | 45°C life-span (high temperature capacity retention) (200 cycles) |
|---|---|---|---|---|
| Example 1 | 225.1 | 209.2 | 92.9% | 81.1% |
| Example 2 | 225.5 | 208.5 | 92.5% | 81.2% |
| Example 3 | 225.4 | 208.9 | 92.7% | 81.1% |
| Example 4 | 225.6 | 208.7 | 92.5% | 80.0% |
| Example 5 | 225.2 | 209.1 | 92.9% | 80.5% |
| Example 6 | 225.3 | 208.5 | 92.5% | 80.3% |
| Example 7 | 225.4 | 208.4 | 92.5% | 81.3% |
| Example 8 | 225.5 | 209.2 | 92.8% | 79.0% |
| Example 9 | 225.7 | 208.8 | 92.5% | 82.3% |
| Example 10 | 225.9 | 210.1 | 93.0% | 83.2% |
| Comparative Example 1 | 225.3 | 206.6 | 91.7% | 75.0% |
| Comparative Example 2 | 225.1 | 206.9 | 91.9% | 72.5% |
| Comparative Example 3 | 220 | 199.7 | 90.8% | 58.2% |

Referring to Table 3, in the secondary batteries of Examples, the initial discharge capacity and the initial efficiency were improved to 208 mAh/g or more and 92% or more, respectively. In the secondary batteries of Examples, it is expected that the lithium-aluminum-sulfur-boron oxide reduced an energy required for insertion and desorption of lithium ions from the surface of the cathode active material.

In Comparative Example 3, as shown in Table 1, the lithium molar ratio decreased after the wet reaction, thereby reducing the charge capacity.

Referring to Table 3, the capacity retention was maintained at 79.0% or more in Examples. It can be predicted from the results of Examples that the Al and S components coated on the surface of the cathode active material and the interface between the primary particles prevented side reactions with the electrolyte to improve life-span of the battery.

As described above, the sulfur source containing an alkali metal maintains a pH of 9 or more, thereby suppressing the desorption of lithium ions in a layered structure of the cathode active material. Additionally, LiAlO₂ (amorphous) stably formed by reacting Al with the residual lithium may react with the electrolyte to form a self-passivation such as LiF and AlF, thereby preventing reduction of life-span.

In the secondary batteries of Comparative Examples, the initial capacity was decreased, and the capacity retention after 200 cycles was also reduced to 75% or less. life-span of the battery.

As described above, the sulfur source containing an alkali metal maintains a pH of 9 or more, thereby suppressing the desorption of lithium ions in a layered structure of the cathode active material. Additionally, LiAlO₂ (amorphous) stably formed by reacting Al with the residual lithium may react with the electrolyte to form a self-passivation such as LiF and AlF, thereby preventing reduction of life-span.

In the secondary batteries of Comparative Examples, the initial capacity was decreased, and the capacity retention after 200 cycles was also reduced to 75% or less.

## Claims

1. A cathode active material for a lithium secondary battery, comprising:
a lithium composite oxide; and
a lithium-aluminum-sulfur-boron oxide formed on a surface of the lithium composite oxide,
wherein an equivalence point is formed at pH 8.5 or higher in a titration graph of the cathode active material using 0.1N HCl,
wherein the lithium composite oxide has a structure of a secondary particle structure in which primary particles are aggregated, and the lithium-aluminum-sulfur-boron oxide is also present at an interface between the primary particles within an inner region of the secondary particle, and
wherein, in an energy-dispersive X-ray spectroscopy (EDS) spectrum measured according to the Description for a cross section of the lithium composite oxide, a peak intensity of a sulfur component at the interface of the primary particles is greater than an average value of peak intensities of Ni at an inside of the primary particles.

2. The cathode active material for a lithium secondary battery according to claim 1, wherein the lithium-aluminum-sulfur-boron oxide is amorphous.

3. The cathode active material for a lithium secondary battery according to any one of claims 1 and 2, wherein the lithium-aluminum-sulfur-boron oxide serves as a coating layer of the lithium composite oxide.

4. The cathode active material for a lithium secondary battery according to any one of claims 1 to 3, wherein the lithium-aluminum-sulfur-boron oxide entirely covers the surface of the lithium composite oxide.

5. The cathode active material for a lithium secondary battery according to any one of claims 1 to 4, wherein the lithium composite oxide comprises nickel, and a mole fraction of nickel in the lithium composite oxide is 0.7 or more among elements other than lithium and oxygen.

6. The cathode active material for a lithium secondary battery according to any one of claims 1 to 5, wherein the lithium composite oxide is represented by Chemical Formula 1:
[Chemical Formula 1] LiₐNi_{y}M_{z}O_{2-β}
wherein, in Chemical Formula 1, M includes at least one selected from the group consisting of Co, Mn, Ti, Zr, Al, Sr and W, and 0.7≤α≤1.2, -0.1≤β≤0.5, 0.7≤y≤0.98, and 0.98< y+z≤1.1.

7. A method of manufacturing a cathode active material for a lithium secondary battery, comprising:
forming a lithium-aluminum-sulfur hydroxide on a surface of a lithium composite oxide; and
dry-reacting the lithium-aluminum-sulfur hydroxide with a boron source to form a lithium-aluminum-sulfur-boron oxide on the surface of the lithium composite oxide,
wherein an equivalence point is formed at pH 8.5 or higher in a titration graph of the cathode active material using 0.1N HCl,
wherein the lithium composite oxide has a structure of a secondary particle structure in which primary particles are aggregated, and the lithium-aluminum-sulfur-boron oxide is also formed at an interface between the primary particles within an inner region of the secondary particle, and
wherein, in an energy-dispersive X-ray spectroscopy (EDS) spectrum for a cross section of the lithium composite oxide, a peak intensity of a sulfur component at the interface of the primary particles is greater than an average value of peak intensities of Ni at an inside of the primary particles.

8. The method according to claim 7, wherein the forming of the lithium-aluminum-sulfur hydroxide comprises mixing the lithium composite oxide with a basic reaction solution containing an aluminum source and a sulfur source, and drying the mixture.

9. The method according to claim 8, wherein a pH of the basic reaction solution is in a range from 8 to 11.

10. The method according to any one of claims 8 and 9, wherein the drying is performed at a temperature ranging from 110°C to 150°C.

11. The method according to any one of claims 7 to 10, wherein the dry-reacting is performed at a temperature ranging from 250°C to 400°C.

## Patentansprüche

1. Kathodenaktivmaterial für eine Lithium-Sekundärbatterie, umfassend:
ein Lithium-Verbundoxid; und
ein Lithium-Aluminium-Schwefel-Bor-Oxid, das auf einer Fläche des Lithium-Verbundoxids gebildet ist,
wobei ein Äquivalenzpunkt bei einem pH-Wert von 8,5 oder höher in einem Titrationsgraph des Kathodenaktivmaterials unter Verwendung von 0,1 N HCl gebildet ist,
wobei das Lithium-Verbundoxid eine Struktur einer Sekundärpartikelstruktur aufweist, in der Primärpartikel aggregiert sind, und das Lithium-Aluminium-Schwefel-Bor-Oxid auch an einer Grenzfläche zwischen den Primärpartikeln innerhalb eines inneren Bereichs des Sekundärpartikels vorhanden ist, und
wobei in einem energiedispersiven Röntgenspektroskopie-Spektrum (EDS), gemessen gemäß der Beschreibung, für einen Querschnitt des Lithium-Verbundoxids eine Peakintensität einer Schwefelkomponente an der Grenzfläche der Primärpartikel größer ist als ein Durchschnittswert der Peakintensitäten von Ni an einer Innenseite der Primärpartikel.

2. Kathodenaktivmaterial für eine Lithium-Sekundärbatterie gemäß Anspruch 1, wobei das Lithium-Aluminium-Schwefel-Bor-Oxid amorph ist.

3. Kathodenaktivmaterial für eine Lithium-Sekundärbatterie gemäß irgendeinem der Ansprüche 1 und 2, wobei das Lithium-Aluminium-Schwefel-Bor-Oxid als Beschichtungsschicht des Lithium-Verbundoxids dient.

4. Kathodenaktivmaterial für eine Lithium-Sekundärbatterie gemäß irgendeinem der Ansprüche 1 bis 3, wobei das Lithium-Aluminium-Schwefel-Bor-Oxid die Fläche des Lithium-Verbundoxids vollständig bedeckt.

5. Kathodenaktivmaterial für eine Lithium-Sekundärbatterie gemäß irgendeinem der Ansprüche 1 bis 4, wobei das Lithium-Verbundoxid Nickel umfasst und ein Molanteil von Nickel in dem Lithium-Verbundoxid unter den Elementen außer Lithium und Sauerstoff 0,7 oder mehr beträgt.

6. Kathodenaktivmaterial für eine Lithium-Sekundärbatterie gemäß irgendeinem der Ansprüche 1 bis 5, wobei das Lithium-Verbundoxid durch die chemische Formel 1 dargestellt wird:
[Chemische Formel 1] LiₐNi_{y}M_{z}O_{2-β}
wobei in der chemischen Formel 1 M mindestens eines ausgewählt aus der Gruppe bestehend aus Co, Mn, Ti, Zr, Al, Sr und W umfasst und 0,7 ≤ α ≤ 1,2, -0,1 ≤ β ≤ 0,5, 0,7 ≤ y ≤ 0,98 und 0,98 < y + z ≤ 1,1 gilt.

7. Verfahren zur Herstellung eines Kathodenaktivmaterials für eine Lithium-Sekundärbatterie, umfassend:
Bilden eines Lithium-Aluminium-Schwefel-Hydroxids auf einer Fläche eines Lithium-Verbundoxids; und
Trockenreagieren des Lithium-Aluminium-Schwefel-Hydroxids mit einer Borquelle, um ein Lithium-Aluminium-Schwefel-Bor-Oxid auf der Fläche des Lithium-Verbundoxids zu bilden,
wobei ein Äquivalenzpunkt bei einem pH-Wert von 8,5 oder höher in einem Titrationsgraph des Kathodenaktivmaterials unter Verwendung von 0,1 N HCl gebildet wird,
wobei das Lithium-Verbundoxid eine Struktur einer Sekundärpartikelstruktur aufweist, in der Primärpartikel aggregiert sind, und das Lithium-Aluminium-Schwefel-Bor-Oxid auch an einer Grenzfläche zwischen den Primärpartikeln innerhalb eines inneren Bereichs des Sekundärpartikels gebildet wird, und
wobei in einem energiedispersiven Röntgenspektroskopie-Spektrum (EDS) für einen Querschnitt des Lithium-Verbundoxids eine Peakintensität einer Schwefelkomponente an der Grenzfläche der Primärpartikel größer ist als ein Durchschnittswert der Peakintensitäten von Ni an einer Innenseite der Primärpartikel.

8. Verfahren gemäß Anspruch 7, wobei das Bilden des Lithium-Aluminium-Schwefel-Hydroxids das Mischen des Lithium-Verbundoxids mit einer basischen Reaktionslösung, die eine Aluminiumquelle und eine Schwefelquelle enthält, und das Trocknen der Mischung umfasst.

9. Verfahren gemäß Anspruch 8, wobei ein pH-Wert der basischen Reaktionslösung in einem Bereich von 8 bis 11 liegt.

10. Verfahren gemäß irgendeinem der Ansprüche 8 und 9, wobei das Trocknen bei einer Temperatur im Bereich von 110 °C bis 150 °C durchgeführt wird.

11. Verfahren gemäß irgendeinem der Ansprüche 7 bis 10, wobei das Trockenreagieren bei einer Temperatur im Bereich von 250 °C bis 400 °C durchgeführt wird.

## Revendications

1. Matériau actif de cathode pour une batterie secondaire au lithium, comprenant :
un oxyde composite de lithium ; et
un oxyde de lithium-aluminium-soufre-bore formé sur une surface de l'oxyde composite de lithium,
où un point d'équivalence est formé à pH 8,5 ou plus dans un graphique de titrage du matériau actif de cathode en utilisant 0,1 N de HCl,
où l'oxyde composite de lithium a une structure d'une structure de particules secondaires dans laquelle des particules primaires sont agrégées, et l'oxyde de lithium-aluminium-soufre-bore est également présent à une interface entre les particules primaires dans une région interne de la particule secondaire, et
où, dans un spectre de spectroscopie aux rayons X à dispersion d'énergie (EDS), mesuré selon la description, pour une section transversale de l'oxyde composite de lithium, une intensité de pic d'un composant de soufre à l'interface des particules primaires est supérieure à une valeur moyenne d'intensités de pic de Ni à l'intérieur des particules primaires.

2. Matériau actif de cathode pour une batterie secondaire au lithium selon la revendication 1, où l'oxyde de lithium-aluminium-soufre-bore est amorphe.

3. Matériau actif de cathode pour une batterie secondaire au lithium selon l'une quelconque des revendications 1 et 2, où l'oxyde de lithium-aluminium-soufre-bore sert de couche de revêtement de l'oxyde composite de lithium.

4. Matériau actif de cathode pour une batterie secondaire au lithium selon l'une quelconque des revendications 1 à 3, où l'oxyde de lithium-aluminium-soufre-bore recouvre entièrement la surface de l'oxyde composite de lithium.

5. Matériau actif de cathode pour une batterie secondaire au lithium selon l'une quelconque des revendications 1 à 4, où l'oxyde composite de lithium comprend du nickel, et une fraction molaire de nickel dans l'oxyde composite de lithium est de 0,7 ou plus parmi des éléments autres que le lithium et l'oxygène.

6. Matériau actif de cathode pour une batterie secondaire au lithium selon l'une quelconque des revendications 1 à 5, où l'oxyde composite de lithium est représenté par la Formule Chimique 1 :
[Formule Chimique 1] Li_{α}Ni_{y}M_{z}O_{2-β}
où, dans la Formule Chimique 1, M comprend au moins un élément choisi dans le groupe consistant en Co, Mn, Ti, Zr, Al, Sr et W, et 0,7 ≤ α ≤ 1,2, -0,1 ≤ β ≤ 0,5, 0,7 ≤ y ≤ 0,98, et 0,98 < y+z ≤ 1,1.

7. Procédé de fabrication d'un matériau actif de cathode pour une batterie secondaire au lithium, comprenant :
la formation d'un hydroxyde de lithium-aluminium-soufre sur une surface d'un oxyde composite de lithium ; et
la réaction à sec de l'hydroxyde de lithium-aluminium-soufre avec une source de bore pour former un oxyde de lithium-aluminium-soufre-bore sur la surface de l'oxyde composite de lithium,
où un point d'équivalence est formé à pH 8,5 ou plus dans un graphique de titrage du matériau actif de cathode en utilisant 0,1 N de HCl,
où l'oxyde composite de lithium a une structure d'une structure de particules secondaires dans laquelle des particules primaires sont agrégées, et l'oxyde de lithium-aluminium-soufre-bore est également formé à une interface entre les particules primaires dans une région interne de la particule secondaire, et
où, dans un spectre de spectroscopie aux rayons X à dispersion d'énergie (EDS) pour une section transversale de l'oxyde composite de lithium, une intensité de pic d'un composant de soufre à l'interface des particules primaires est supérieure à une valeur moyenne d'intensités de pic de Ni à l'intérieur des particules primaires.

8. Procédé selon la revendication 7, où la formation de l'hydroxyde de lithium-aluminium-soufre comprend le mélange de l'oxyde composite de lithium avec une solution de réaction basique contenant une source d'aluminium et une source de soufre, et le séchage du mélange.

9. Procédé selon la revendication 8, où un pH de la solution de réaction basique est dans une plage de 8 à 11.

10. Procédé selon l'une quelconque des revendications 8 et 9, où le séchage est effectué à une température allant de 110°C à 150°C.

11. Procédé selon l'une quelconque des revendications 7 à 10, où la réaction à sec est effectuée à une température allant de 250°C à 400°C.
